# EUROPEAN PATENT APPLICATION

(11) **EP 2 453 081 A2**
(43) Date of publication of application: **16.05.2012**
(21) Application number: 11188220.5
(22) Date of filing: 08.11.2011
(51) Int. Cl.: E04H 12/08, F03D 11/04

(54) **Reinforcement assembly for use with a support tower of a wind turbine**

(30) Priority: 10.11.2010 US 943607
(71) Applicant: General Electric Company, Schenectady, NY 12345 (US)
(72) Inventor: Paura, Ingo, 49716 Meppen (DE); Karaca, Hueseyin, 44625 Herne (DE)
(74) Representative: Bedford, Grant Richard

(57) **Abstract**

A reinforcement assembly (52) for use with a wind turbine tower (12), the wind turbine tower including a first tower member (46) coupled to a second tower member (48) is provided. The reinforcement assembly including a first reinforcement member (122) coupled to the first tower member, a second reinforcement member (124) coupled to the second tower member, and a tension member (136) coupled between the first reinforcement member and the second reinforcement member, the tension member configured to at least partially transfer a bending load from the first tower member to the second tower member.

## Description

The subject matter described herein relates generally to wind turbines and, more particularly, to a support tower for use with a wind turbine.

At least some known wind turbines include a nacelle fixed atop a tower. The nacelle includes a rotor assembly coupled to a generator through a shaft. In known rotor assemblies, a plurality of blades extend from a rotor. The blades are oriented such that wind passing over the blades turns the rotor and rotates the shaft, thereby driving the generator to generate electricity.

At least some known wind turbines include support towers that include a plurality of tubular-shaped tower support members. Adjacent tower support members are coupled together to form known support towers. At least some known support towers are subject to large cyclic loading, which results in a large displacement of tower support members and increased bending stresses and torsional stresses induced to the tower support members. Known support tower members may be subjected to stresses that cause fatigue cracking and/or failure, particularly at the joint between adjacent support tower members. Conventional methods for repairing some known support tower members include disassembling the support tower, replacing support tower members, and reassembling the support tower, which may be expensive and time consuming.

In one aspect according to the present invention, a reinforcement assembly for use with a wind turbine tower is provided. The wind turbine tower includes a first tower member that is coupled to a second tower member. The reinforcement assembly includes a first reinforcement member that is coupled to the first tower member. A second reinforcement member is coupled to the second tower member. A tension member is coupled between the first reinforcement member and the second reinforcement member. The tension member is configured to at least partially transfer a bending load from the first tower member to the second tower member.

In another aspect, a tower for use with a wind turbine is provided. The tower includes a first tower member that extends from a supporting surface. At least a second tower member is coupled to the first tower member to form the tower. At least one reinforcement assembly is coupled to the first tower member and the second tower member. The reinforcement assembly is configured to transfer a bending load from the first tower member to the second tower member.

In yet another aspect, a wind turbine is provided. The wind turbine includes a nacelle, a rotor that is rotatably coupled to the nacelle, and a tower that is coupled to the nacelle for supporting the nacelle a distance from a supporting surface. The tower includes a first tower member that is coupled to the supporting surface. At least a second tower member is coupled to the first tower member. At least one reinforcement assembly is coupled to the first tower member and the second tower member. The reinforcement assembly is configured to transfer a bending load from the first tower member to the second tower member.

Various aspects and embodiments of the present invention will now be described in connection with the accompanying drawings, in which:
FIG. 1 is a perspective view of an exemplary wind turbine.
FIG. 2 is a perspective view of an interior of an exemplary wind turbine shown in FIG. 1 that includes an exemplary tower reinforcement assembly.
FIG. 3 is a cross-sectional view of the tower reinforcement assembly shown in FIG. 2 taken along section line 3-3 in FIG. 2;
FIG. 4 is an enlarged perspective view of an exemplary tension assembly suitable for use with the tower reinforcement assembly shown in FIG. 3.

Various of the embodiments described herein facilitate assembling a wind turbine support tower. More specifically, the embodiments described herein include a reinforcement assembly that facilitates reducing bending and shear stresses induced to tower members of the wind turbine tower from environmental loads, and facilitates reducing horizontal displacement of the wind turbine tower.

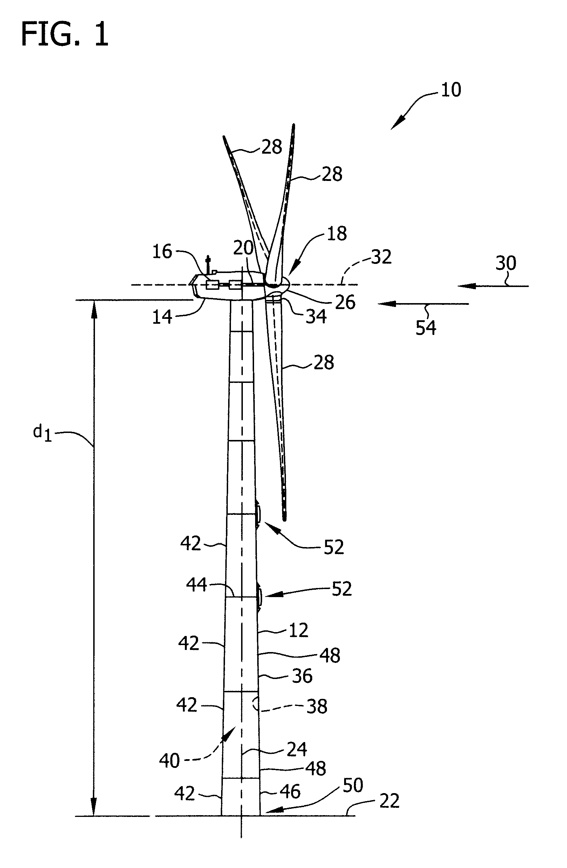

FIG. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12, a nacelle 14 mounted on tower 12, a generator 16 positioned within nacelle 14, and a rotor 18 that is rotatably coupled to generator 16 by a rotor shaft 20. Tower 12 extends between a support surface 22 and nacelle 14 and defines a vertical axis 24. Rotor 18 includes a rotatable hub 26 and at least one rotor blade 28 coupled to and extending outward from hub 26. In the exemplary embodiment, rotor 18 includes three rotor blades 28. In an alternative embodiment, rotor 18 includes more or less than three rotor blades 28.

Rotor blades 28 are spaced about hub 26 to facilitate rotating rotor 18 to enable kinetic energy to be transferred from the wind into usable mechanical energy, and subsequently, electrical energy. In the exemplary embodiment, rotor blades 28 have a length ranging from about 30 meters (m) (99 feet (ft)) to about 120 m (394 ft). Alternatively, rotor blades 28 may have any suitable length that enables wind turbine 10 to function as described herein. For example, other non-limiting examples of rotor blade lengths include 10 m or less, 20 m, 37 m, or a length that is greater than 120 m. As wind strikes rotor blades 28 from a direction 30, rotor 18 is rotated about an axis of rotation 32. As rotor blades 28 are rotated and subjected to centrifugal forces, rotor blades 28 are also subjected to various forces and moments. As such, rotor blades 28 may deflect and/or rotate from a neutral, or non-deflected, position to a deflected position. Moreover, a pitch angle or blade pitch of rotor blades 28, i.e., an angle that determines a perspective of rotor blades 28 with respect to direction 30 of the wind, may be changed by a pitch adjustment system 34 to control the load and power generated by wind turbine 10 by adjusting an angular position of at least one rotor blade 28 relative to wind vectors.

In the exemplary embodiment, tower 12 includes a substantially tubular-shaped body 36 having an inner surface 38 that defines a cavity 40 extending between support surface 22 and nacelle 14. Alternatively, tower 12 may be a lattice-type tower. In the exemplary embodiment, tower 12 includes a plurality of tower members 42. Each tower member 42 is coupled to one or more adjacent tower members 42 at a circumferential joint 44 that is defined between adjacent tower member 42. Referring to FIG. 1, in the exemplary embodiment, tower 12 includes a first tower member 46 and at least one second tower member 48. First tower member 46 is coupled to a base 50 that is positioned at or near support surface 22. First tower member 46 extends upward from base 50 towards second tower member 48. Second tower member 48 is coupled to and extends between first tower member 46 and nacelle 14 such that nacelle 14 is supported from tower 12 and is positioned a distance d₁ above support surface 22.

Tower 12 further includes at least one tower reinforcement assembly 52 coupled to at least one tower member 42 for facilitating reducing a local alternating bending stress induced to tower member 42 from wind forces (represented by arrow 54). In addition, tower reinforcement assembly 52 is also configured to facilitate reducing a formation and/or propagation of a structural discontinuity within tower member 42. As used herein, the term "structural discontinuity" refers to a displacement of material within a structural component and/or a separation of two or more structural components. For example, a structural discontinuity may be one or more of a crack, a displaced joint, a joint separation, a fracture, a deformation band, and/or a compression band. During operation, a structural discontinuity may form at or near circumferential joint 44. In the exemplary embodiment, tower reinforcement assembly 52 is coupled to first tower member 46 and to second tower member 48 at or near circumferential joint 44 and is selectively positioned with respect to circumferential joint 44 to extend across a structural discontinuity. In an alternative embodiment, tower 12 is a lattice-type tower that includes two or more vertical support legs and at least one cross-member extending between the vertical support legs to form tower 12. In such an embodiment, tower reinforcement assembly 52 is coupled to vertical support legs and/or cross-member to facilitate increasing a structural integrity of vertical support legs by reducing the formation and/or propagation of a structural discontinuity within the vertical support legs and/or the cross-member.

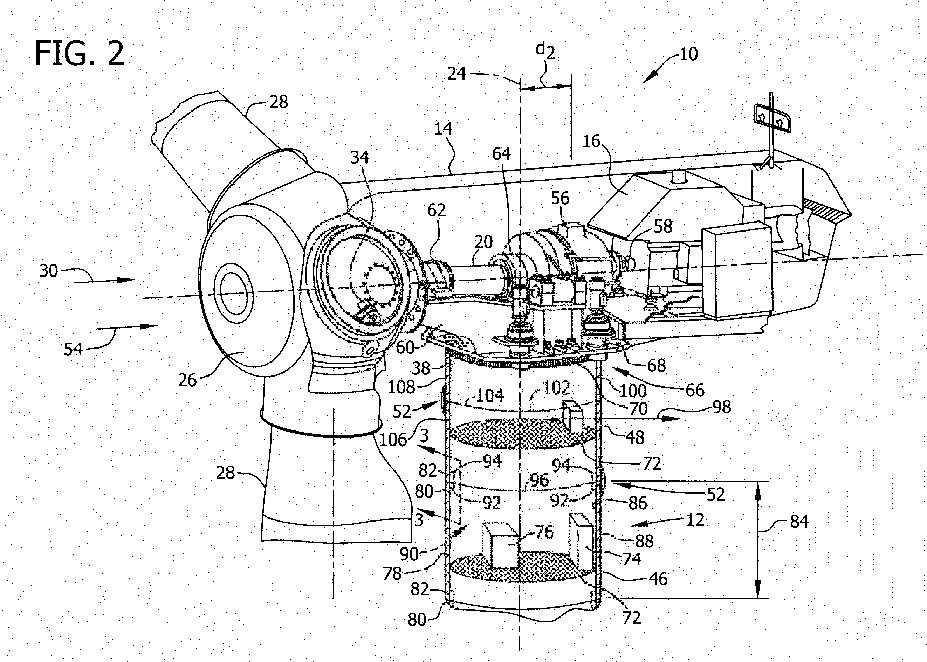

FIG. 2 is a perspective view of an interior of wind turbine 10 shown in FIG. 1 that includes an exemplary tower reinforcement assembly 52. Identical components shown in FIG. 2 are labeled with the same reference numbers used in FIG. 1. In the exemplary embodiment, wind turbine 10 includes hub 26 rotatably coupled to generator 16 by rotor shaft 20. Generator 16 and rotor shaft 20 are each positioned within nacelle 14. A gearbox 56 is coupled between generator 16 and rotor shaft 20. Gearbox 56 includes a high speed shaft 58 that is coupled to generator 16. Rotation of rotor shaft 20 rotatably drives gearbox 56 that subsequently drives high speed shaft 58. High speed shaft 58 rotatably drives generator 16 to facilitate production of electrical power by generator 16. In the exemplary embodiment, gearbox 56 utilizes a dual path geometry to drive high speed shaft 58. Alternatively, rotor shaft 20 is coupled directly to generator 16.

In the exemplary embodiment, rotor shaft 20, generator 16, and gearbox 56 are supported by a generator support assembly 60. Generator support assembly 60 includes a forward support bearing 62 and a main shaft support bearing 64. Forward support bearing 62 and main shaft support bearing 64 facilitate radial support and alignment of rotor shaft 20. Forward support bearing 62 is coupled to generator support assembly 60 at or near hub 26. Main shaft support bearing 64 is coupled to generator support assembly 60 at or near gearbox 56 and/or generator 16. In the exemplary embodiment, wind turbine 10 also includes a yaw system 66 that may be used to rotate nacelle 14 and hub 26 about vertical axis 24 to control the perspective of rotor blades 28 with respect to direction 30 of the wind. Yaw system 66 includes a yaw drive assembly 68 that is coupled to a yaw bearing 70. Yaw bearing 70 is coupled between generator support assembly 60 and tower 12 to facilitate rotating nacelle 14 with respect to tower 12 about vertical axis 24.

In the exemplary embodiment, tower 12 includes one or more support platforms 72 that are coupled to inner surface 38 of tower 12. Each support platform 72 is vertically spaced along vertical axis 24 of tower 12 and is configured to support various equipment such as, for example a power transformer 74 and a power converter 76. In the exemplary embodiment, each tower member 42 includes a substantially tubular-shaped sidewall 78 that extends between a first end 80 and an opposite second end 82 and has a length 84 that is defined between first end 80 and second end 82. Sidewall 78 has a radially inner surface 86 and a radially outer surface 88. Radially inner surface 86 at least partially defines an inner cavity 90 that extends through tower member 42 between first end 80 and second end 82 and along vertical axis 24. A first flange 92 is coupled to inner surface 86 at or near first end 80 of sidewall 78 and is oriented circumferentially about sidewall 78. A second flange 94 is coupled to inner surface 86 at or near second end 82 of sidewall 78 and is oriented circumferentially about sidewall 78.

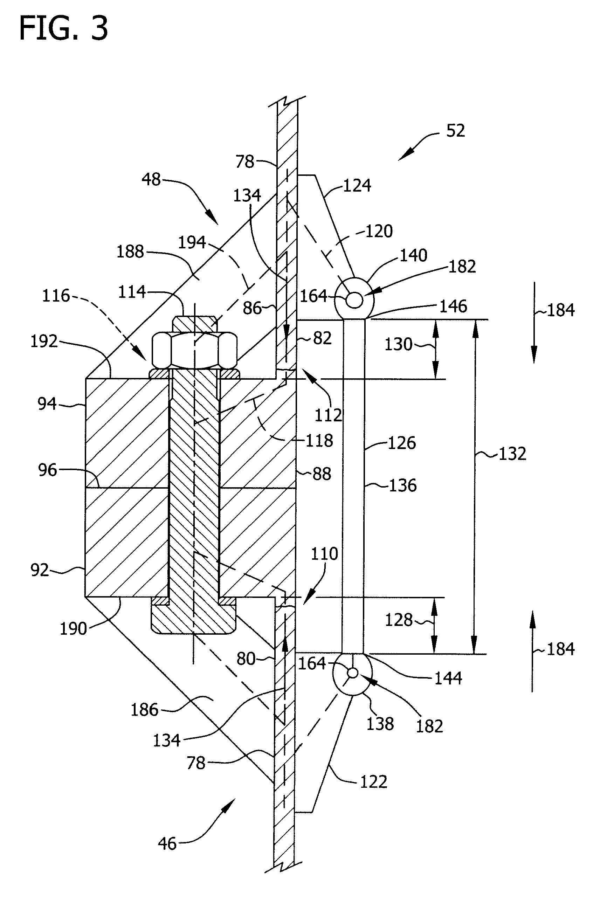

In the exemplary embodiment, first tower member 46 is coupled to second tower member 48 such that a first circumferential joint 96 is defined between a first flange 92 of first tower member 46 and a cooperating second flange 94 of second tower member 48. At least one tower reinforcement assembly 52 is coupled to first tower member 46 and to second tower member 48, and extends across first circumferential joint 96, as shown in FIG. 3. Tower reinforcement assembly 52 is configured to facilitate increasing a stiffness strength in tower 12 to facilitate reducing local alternating bending stresses of tower 12 when subjected to wind forces 54. Tower reinforcement assembly 52 is also oriented to at least partially transfer a bending loading from first tower member 46 to second tower member 48. During operation of wind turbine 10, wind acting on wind turbine 10 imparts wind forces 54 that are partly transformed into rotational energy and partly into a bending load, represented by arrow 98 shown in FIG. 2, tending to bend tower 12 in the direction of wind forces 54 and displace nacelle 14 a distance d₂ from vertical axis 24. Bending load 98 tending to displace nacelle 14 in a horizontal direction and/or a rotational direction is imparted to tower members 42 from wind forces 54, such that bending and shear stresses are induced to tower members 42. Tower members 42 transfer such bending and shear stresses at least partly to tower reinforcement assembly 52, such that tower members 42 are subjected to reduced alternating bending loading during operation of wind turbine 10.

In one embodiment, each tower member 42 includes a plurality of tower sections 100. Each tower section 100 is coupled to at least one adjacent tower section 100 to form tower member 42. Tower section 100 is coupled to adjacent tower section 100 at a second circumferential joint 102. In one embodiment, adjacent tower sections 100 are coupled together with a weld 104. Alternatively, adjacent tower sections 100 may be coupled together by a mechanical joint, a fastening assembly, a slip-joint, and/or any suitable assembly that enables tower 12 to function as described herein. In this embodiment, tower reinforcement assembly 52 is coupled to a first tower section 106 and a second tower section 108, as shown in FIG. 2, and extends across second circumferential joint 102 to at least partially transfer bending load 98 from first tower section 106 to second tower section 108.

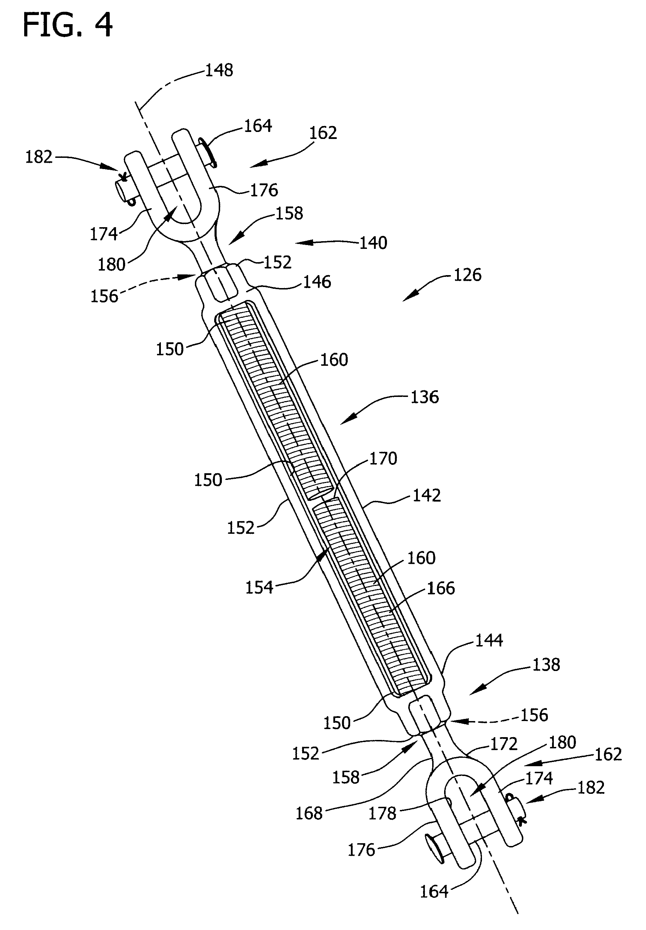

FIG. 3 is a cross-sectional view of tower reinforcement assembly 52 taken along section line 3-3 shown in FIG. 2. FIG. 4 is an enlarged perspective view of a portion of tower reinforcement assembly 52. Identical components shown in FIG. 4 are labeled with the same reference numbers used in FIG. 3. In the exemplary embodiment, first tower member 46 includes first flange 92 coupled to first end 80 of sidewall 78 at a first flange weld 110. Second tower member 48 includes second flange 94 coupled to second end 82 of sidewall 78 at a second flange weld 112. At least one bolt 114 is inserted through at least one cooperating opening 116 defined through first flange 92 and second flange 94 to fixedly couple first tower member 46 to second tower member 48 at first circumferential joint 96. Alternatively, first tower member 46 may be coupled to second tower member 48 with a weld, a mechanical joint, a fastening assembly, a slip-joint, and/or any suitable assembly that enables tower 12 to function as described herein. In the exemplary embodiment, first flange 92 and second flange 94 each extend inwardly from radially inner surface 86 of sidewall 78 towards vertical axis 24 (shown in FIG. 2), and are oriented substantially perpendicularly from sidewall 78. First tower member 46 is coupled to second tower member 48 such that a first load path, represented by arrow 118, is defined between first flange 92, bolt 114, and second flange 94. In addition, tower reinforcement assembly 52 is coupled to radially outer surfaces 88 of first tower member 46 and second tower member 48 such that a second load path, represented by arrow 120, is defined between first tower member 46, tower reinforcement assembly 52, and second tower member 48.

During operation of tower 12, first portion of bending load 98 is transferred from second tower member 48 to first tower member 46 through first load path 118. In addition, a second portion of bending load 98 is transferred from second tower member 48 to first tower member 46 through second load path 120. In an alternative embodiment, first flange 92 and second flange 94 extend outwardly from radially outer surface 88 and extend away from vertical axis 24 (shown in FIG. 2). In such an embodiment, tower reinforcement assembly 52 is coupled to radially inner surfaces 86 of first tower member 46 and second tower member 48.

In the exemplary embodiment, during operation of wind turbine 10, a structural discontinuity may form within first flange weld 110 between first flange 92 and sidewall 78, and/or within second flange weld 112 between second flange 94 and sidewall 78. Tower reinforcement assembly 52 is coupled to first tower member 46 and second tower member 48 and extends across first flange weld 110, first circumferential joint 96, and second flange weld 112 to facilitate reducing a formation and/or an expansion of the structural discontinuity.

In the exemplary embodiment, tower reinforcement assembly 52 includes a first reinforcement member 122, a second reinforcement member 124, and a tension assembly 126 coupled between first reinforcement member 122 and second reinforcement member 124. First reinforcement member 122 is coupled to radially outer surface 88 of first tower member 46 and is positioned a first axial distance 128 from first flange 92 along vertical axis 24. Second reinforcement member 124 is coupled to radially outer surface 88 of second tower member 48 and is positioned a second axial distance 130 from second flange 94 along vertical axis 24. Tension assembly 126 is coupled between first reinforcement member 122 and second reinforcement member 124 and has a length 132 defined between first reinforcement member 122 and second reinforcement member 124. Tension assembly 126 extends across first flange weld 110, first circumferential joint 96, and second flange weld 112. Tension assembly 126 is configured to bias first tower member 46 towards second tower member 48 to impart a compression force, represented by arrows 134, between first tower member 46 and second tower member 48. Moreover, in the exemplary embodiment, tension assembly 126 is selectively actuatable to adjust compression force 134 imparted between first tower member 46 and second tower member 48 from tension assembly 126 to reduce alternating bending stresses adjacent the structural discontinuity.

In the exemplary embodiment, tension assembly 126 includes tension member 136, a first rod assembly 138, and an opposite second rod assembly 140. As shown in FIG. 4, tension member 136 includes a support body 142 that extends between a first end 144 and an opposite second end 146, and defines a longitudinal axis 148 between first end 144 and second end 146. Support body 142 has an inner surface 150 and an outer surface 152. Inner surface 150 defines a cavity 154 that extends between first end 144 and second end 146 and is oriented along longitudinal axis 148. First end 144 and second end 146 each include a threaded interior surface 156 that defines an opening 158 that extends from inner surface 150 to outer surface 152 and is oriented with respect to longitudinal axis 148.

In the exemplary embodiment, first rod assembly 138 and second rod assembly 140 each include a tension rod 160, a bracket 162, and a clevis pin 164. Tension rod 160 has a threaded outer surface 166 that extends between a first end 168 and a second end 170. Bracket 162 includes a base member 172 coupled to first end 168 of tension rod 160, a first arm 174 and an opposing second arm 176. First arm 174 is coupled to base member 172 and extends outwardly from base member 172. Second arm 176 is coupled to base member 172 and extends outwardly from base member 172 and terminates substantially parallel to first arm 174, such that first arm 174 and second arm 176 are in an opposing relationship. Bracket 162 has an inner surface 178 that defines a opening 180 that extends between base member 172, first arm 174, and second arm 176 and is sized and shaped to receive at least a portion of one of first reinforcement member 122 and second reinforcement member 124. First arm 174 and second arm 176 each include a cooperating opening 182 that is sized and shaped to receive clevis pin 164.

In the exemplary embodiment, first rod assembly 138 is coupled between first end 144 of tension member 136 and first reinforcement member 122. Tension rod 160 of first rod assembly 138 is rotatably coupled to tension member 136 and is inserted through opening 158 of first end 144 such that threaded outer surface 166 cooperates with threaded interior surface 156. Tension rod 160 of first rod assembly 138 is oriented with respect to longitudinal axis 148 and at least partially positioned within cavity 154. At least a portion of first reinforcement member 122 is positioned within tension bracket opening 180 of first rod assembly 138. Clevis pin 164 is inserted through cooperating opening 182 defined through first arm 174, first reinforcement member 122, and second arm 176 to couple first rod assembly 138 to first reinforcement member 122. Similarly, second rod assembly 140 is coupled between second end 146 of tension member 136 and second reinforcement member 124. Tension rod 160 of second rod assembly 140 is rotatably coupled to second end 146 and is inserted through opening 158 of second end 146 and at least partially positioned within cavity 154. At least a portion of second reinforcement member 124 is positioned within tension bracket opening 180 of second rod assembly 140. Clevis pin 164 is inserted through cooperating opening 182 defined through bracket 162, second rod assembly 140, and second reinforcement member 124 to couple second rod assembly 140 to second reinforcement member 124.

In the exemplary embodiment, tension member 136 is rotatable about longitudinal axis 148 to bias first rod assembly 138 towards second rod assembly 140 such that a tension load, represented by arrows 184, is imparted from tension member 136 to first rod assembly 138, and from tension member 136 to second rod assembly 140. Moreover, tension member 136 is configured to impart tension load 184 to first rod assembly 138 to bias first reinforcement member 122 towards second reinforcement member 124. In addition, tension member 136 is configured to impart tension load 184 to second rod assembly 140 to bias second reinforcement member 124 towards first reinforcement member 122.

In the exemplary embodiment, tension member 136 is selectively actuatable to adjust tension load 184 imparted to first rod assembly 138 and second rod assembly 140 from tension member 136. Tension member 136 is configured to impart tension load 184 to first rod assembly 138 and to second rod assembly 140 to bias first tower member 46 towards second tower member 48 to impart compression force 134 between first tower member 46 and second tower member 48.

Referring further to FIG. 3, tower reinforcement assembly 52 includes a first stiffening plate 186 and a second stiffening plate 188. In a particular embodiment, first stiffening plate 186 and second stiffening plate 188 are coupled to radially inner surface 86 of tower member 42, and are positioned opposite tension assembly 126. In this embodiment, first stiffening plate 186 is coupled to first tower member 46 and positioned between an outer surface 190 of first flange 92 and radially inner surface 86 to facilitate increasing a stiffness of first tower member 46. Second stiffening plate 188 is coupled to second tower member 48 and positioned between an outer surface 192 of second flange 94 and radially inner surface 86 to facilitate increasing a stiffness of second tower member 48. First stiffening plate 186 and second stiffening plate 188 form a compression load path, represented by arrow 194, between first stiffening plate 186 and second stiffening plate 188.

The above-described systems and methods facilitate assembling a support tower assembly that facilitates reducing a local alternating bending stress in the support tower of a wind turbine during operation. More specifically the support tower described herein includes a reinforcement assembly that is coupled to a tower support member to facilitate reducing alternating bending stress induced to support tower members from wind loads. Moreover, the reinforcement assembly described herein may be retrofitted to a tower support member to repair and/or reinforce the tower support member to reduce and/or prevent an expansion of a structural discontinuity formed within the tower support member. As such, the cost of dismantling and reassembling and/or repairing a wind turbine is avoided and/or significantly reduced.

Exemplary embodiments of a support tower for use with a wind turbine and a system for designing the support tower are described above in detail. The apparatus and system are not limited to the specific embodiments described herein, but rather, components of the apparatus and system may be utilized independently and separately from other components described herein. For example, the apparatus and system may also be used in combination with wind turbine support systems, and are not limited to practice with only the support towers as described herein. Rather, the exemplary embodiment can be implemented and utilized in connection with many other wind turbine support systems.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A reinforcement assembly for use with a wind turbine tower, the wind turbine tower including a first tower member coupled to a second tower member, said reinforcement assembly comprising:
   a first reinforcement member coupled to the first tower member;
   a second reinforcement member coupled to the second tower member; and,
   a tension member coupled between said first reinforcement member and said second reinforcement member, said tension member configured to at least partially transfer a bending load from the first tower member to the second tower member.
2. A reinforcement assembly in accordance with clause 1, wherein said tension member is configured to bias said first reinforcement member towards said second reinforcement member to impart a compression force between the first tower member and the second tower member.
3. A reinforcement assembly in accordance with any preceding clause, wherein said tension member is selectively actuatable to adjust the compression force imparted to the first tower member and the second tower member.
4. A reinforcement assembly in accordance with any preceding clause, further comprising a first support rod coupled between said first reinforcement member and said tension member, said tension member configured to impart a tension load to said first support rod to bias said first reinforcement member towards said second reinforcement member.
5. A reinforcement assembly in accordance with any preceding clause, further comprising a second support rod coupled between said second reinforcement member and said tension member, said tension member configured to impart a tension load to said second support rod to bias said second reinforcement member towards said first reinforcement member.
6. A reinforcement assembly in accordance with any preceding clause, wherein said tension member is selectively actuatable to adjust a tension load imparted to said first support rod and said second support rod to adjust a compression force between the first tower member and the second tower member.
7. A tower for use with a wind turbine, said tower comprising:
   a first tower member extending from a supporting surface;
   at least a second tower member coupled to said first tower member to form said tower; and,
   at least one reinforcement assembly coupled to said first tower member and said second tower member, said reinforcement assembly configured to transfer a bending load from said first tower member to said second tower member.
8. A tower in accordance with any preceding clause, wherein said reinforcement assembly is configured to bias said first tower member towards said second tower member to impart a compression force between said first tower member and said second tower member.
9. A tower in accordance with any preceding clause, wherein said reinforcement assembly comprises a tension member selectively actuatable to adjust the compression force imparted to said first tower member and said second tower member.
10. A tower in accordance with any preceding clause, wherein said reinforcement assembly comprises a first reinforcement member coupled between said first tower member and said tension member, said first reinforcement member extending outwardly from said second tower member.
11. A tower in accordance with any preceding clause, wherein said reinforcement assembly comprises a second reinforcement member coupled between said second tower member and said tension member, said second reinforcement member extending outwardly from said first tower member.
12. A tower in accordance with any preceding clause, wherein said reinforcement assembly comprises a first support rod coupled between said first reinforcement member and said tension member, said tension member configured to impart a tension load to said first support rod to bias said first tower member towards said second tower member.
13. A tower in accordance with any preceding clause, wherein said reinforcement assembly comprises a second support rod coupled between said second reinforcement member and said tension member, said tension member configured to impart a tension load to said second support rod to bias said second tower member towards said first tower member.
14. A tower in accordance with claim any preceding clause, wherein said tension member is selectively actuatable to adjust a tension load imparted to said first support rod and said second support rod to adjust the compression force between said first tower member and said second tower member.
15. A wind turbine, comprising:
   a nacelle;
   a rotor rotatably coupled to said nacelle; and,
   a tower coupled to said nacelle for supporting said nacelle at a distance from a supporting surface, said tower comprising:
      a first tower member coupled to the supporting surface;
      at least a second tower member coupled to said first tower member; and,
      at least one reinforcement assembly coupled to said first tower member and said second tower member, said reinforcement assembly configured to transfer a bending load from said first tower member to said second tower member.
16. A wind turbine in accordance with any preceding clause, wherein said reinforcement assembly is configured to bias said first tower member towards said second tower member to impart a compression force between said first tower member and said second tower member.
17. A wind turbine in accordance with any preceding clause, wherein said reinforcement assembly comprises a tension member selectively actuatable to adjust the compression force imparted to said first tower member and said second tower member.
18. A wind turbine in accordance with any preceding clause, wherein said reinforcement assembly comprises:
   a first reinforcement member coupled between said first tower member and said tension member, and,
   a second reinforcement member coupled between said second tower member and said tension member, said tension member configured to impart a tension load to said first reinforcement member and said second reinforcement member.
19. A wind turbine in accordance with any preceding clause, wherein said reinforcement assembly further comprises:
   a first support rod coupled between said first reinforcement member and said tension member, and,
   a second support rod coupled between said second reinforcement member and said tension member, said tension member configured to impart a tension load to said first support rod and to said second support rod.
20. A wind turbine in accordance with any preceding clause, wherein said tension member is selectively actuatable to adjust a tension load imparted to said first support rod and said second support rod to adjust the compression force between said first tower member and said second tower member.

## Claims

1. A reinforcement assembly (52) for use with a wind turbine tower (12), the wind turbine tower including a first tower member (46) coupled to a second tower member (48), said reinforcement assembly comprising:
a first reinforcement member (122) coupled to the first tower member;
a second reinforcement member (124) coupled to the second tower member; and
a tension member (136) coupled between said first reinforcement member and said second reinforcement member, said tension member configured to at least partially transfer a bending load from the first tower member to the second tower member.

2. A reinforcement assembly (520 in accordance with claim 1, wherein said tension member (136) is configured to bias said first reinforcement member (122) towards said second reinforcement member (124) to impart a compression force between the first tower member (46) and the second tower member (48).

3. A reinforcement assembly (52) in accordance with any preceding claim, wherein said tension member (136) is selectively actuatable to adjust the compression force imparted to the first tower member (46) and the second tower member (48).

4. A reinforcement assembly (52) in accordance with any preceding claim, further comprising a first support rod coupled between said first reinforcement member (122) and said tension member (136), said tension member configured to impart a tension load to said first support rod to bias said first reinforcement member towards said second reinforcement member (124).

5. A reinforcement assembly (52) in accordance with any preceding claim, further comprising a second support rod coupled between said second reinforcement member (124) and said tension member (136), said tension member configured to impart a tension load to said second support rod to bias said second reinforcement member towards said first reinforcement member (122).

6. A reinforcement assembly (52) in accordance with any preceding claim, wherein said tension member (136) is selectively actuatable to adjust a tension load imparted to said first support rod and said second support rod to adjust a compression force between the first tower member (46) and the second tower member (48).

7. A tower (12) for use with a wind turbine (10), said tower comprising:
a first tower member (46) extending from a supporting surface (22);
at least a second tower member (44) coupled to said first tower member to form said tower; and
at least one reinforcement assembly (122) coupled to said first tower member and said second tower member (124), said reinforcement assembly configured to transfer a bending load from said first tower member to said second tower member.

8. A tower (12) in accordance with claim 7, wherein said reinforcement assembly (122) is configured to bias said first tower member (46) towards said second tower member (48) to impart a compression force between said first tower member and said second tower member.

9. A tower (12) in accordance with claim 7 or claim 8, wherein said reinforcement assembly (122) comprises a tension member (136) selectively actuatable to adjust the compression force imparted to said first tower member (46) and said second tower member (48).

10. A tower (12) in accordance with any of claims 7 to 9, wherein said reinforcement assembly (52) comprises a first reinforcement member (122) coupled between said first tower member (46), and said tension member (136), said first reinforcement member extending outwardly from said second tower member (48).
